# EUROPEAN PATENT SPECIFICATION

(11) **EP 3 127 890 B1**
(45) Date of publication and mention of the grant of the patent: **23.10.2019**
(21) Application number: 15772753.8
(22) Date of filing: 24.03.2015
(51) Int. Cl.: C04B 35/66, C10B 29/06, F27D 1/16, C04B 33/02, C04B 33/22, C04B 33/36

(54) **GUNNING MASS**
SPRITZMASSE
MASSE DE GUNITAGE

(30) Priority: 01.04.2014 JP 2014075547
(43) Date of publication of application: 08.02.2017
(73) Proprietor: Krosakiharima Corporation, Kitakyushu-shi Fukuoka 806-8586 (JP)
(72) Inventor: IKEBE, Tetsunori, Kitakyushu-shi Fukuoka 806-8586 (JP); DOZONO, Nobuhiko, Kitakyushu-shi Fukuoka 806-8586 (JP); INOUE, Takakimi, Kitakyushu-shi Fukuoka 806-8586 (JP)
(74) Representative: Vossius & Partner Patentanwälte Rechtsanwälte mbB
(86) International application number: PCT/JP2015/058923
(87) International publication number: WO 2015/151933

(56) References cited:
- JP-A- S5 767 783
- JP-A- H05 194 042
- JP-A- H06 256 065
- JP-A- H09 157 045
- JP-A- H11 268 962
- JP-A- H11 268 962
- JP-A- 2000 233 977

## Description

### TECHNICAL FIELD

The present invention relates to an injection refractory material applicable to a kiln or furnace such as a coke oven.

### BACKGROUND ART

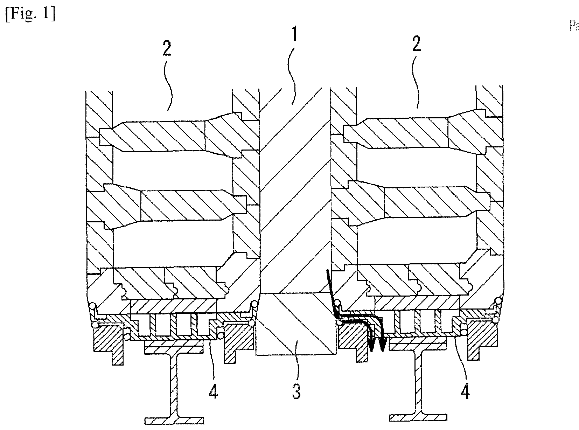

FIG. 1 depicts a commonly-used structure of a coke oven as one example of a kiln or furnace to which an injection refractory material is applied. In a coke oven, coal is charged into each of a large number of carbonization chambers 1 arranged in parallel, and carbonized by heat from combustion chambers to thereby produce coke. Then, an oven cover 3 of the carbonization chamber is removed, and the produced coke is pushed out of the carbonization chamber by a pusher configured to be moved along and between opposed inner walls defining each of the carbonization chambers.

In such a coke oven, if, due to aging degradation, a metal protector 4 holding refractory bricks or the refractory bricks is(are) damaged or deformed to cause difficulty in maintaining sealability of the carbonization chamber 1, in-chamber gas (gas in the carbonization chamber) can leak as indicated by the arrowed lines in FIG. 1 and burn. This leads to a vicious cycle of further damaging the protector 4. Moreover, when an internal pressure of the carbonization chamber becomes a negative value, ambient air is sucked into the carbonization chamber, and thus refractory bricks forming the inner walls are cooled by the sucked air and damaged due to thermal spalling. If the refractory bricks are damaged, coke is bitten into the damaged portion, causing a pusher stuck state in the course of pushing-out by the pusher. In the event of the pusher stuck state, an operation of the coke oven has to be undesirably stopped due to necessity of work to remove the coke bitten into the refractory bricks. As above, it is necessary to keep the in-chamber gas from leaking outside the coke oven.

Therefore, in order to keep the in-chamber gas from leaking outside the coke oven, it is common to perform work to pressure-inject an injection refractory material into a gap between the protector and the refractory materials. That is, this technique is intended to fill a gap between the protector and the refractory materials, with an injection refractory material to thereby seal the gap.

With a view to improving sealability of the gap, it has heretofore been attempted to improve fluidity of an injection refractory material. For example, the following Patent Document 1 discloses a technique of improving the fluidity of an injection refractory material by adding hollow spherical alumina particles thereto.

However, the technique of simply improving the fluidity of an injection refractory material has a limitation in improving the sealability. Specifically, in the case where the gap has a narrow and complicated shape as in an oven port of the above coke oven, an unfilled area is liable to be formed, and the injection refractory material is shrunk after the injection, along with dehydration or the like.

Patent Document 2 relates to a heat insulating castable refractory material containing alumina cement as a binder, an adiabatic additive added with gas-containing spherical hollow particles made of a polymer of acrylonitrile having an average particle size of 5 to 200 µm and/or copolymer having a high acrylonitrile content and wet-treated castable refractory.

Patent Document 3 refers to a heat insulating castable refractory material for use in forming and repairing a refractory and heat insulating lining of an industrial furnace.

### CITATION LIST

### [Parent Document]

Patent Document 1: JP 10-101442 A
Patent Document 2: JP H11 268962 A
Patent Document 3: JP H09 157045 A

### SUMMARY OF INVENTION

### [Technical Problem]

The present invention addresses a technical problem of providing an injection refractory material capable of improving sealability of a gap in a kiln or furnace.

### [Solution to Technical Problem]

In order to solve the above technical problem, the present invention is designed to impart, to an injection refractory material, significant volume expansibility in a pressure-injected state thereof. Specifically, according to one aspect of the present invention, there is provided an injection refractory material applicable to a kiln or furnace, wherein the injection refractory material is capable of, when it is heated in an environment having an ambient temperature of 80 to 500°C, undergoing a volume expansion of 1.3 times or more its initial volume before the heating, wherein the present invention is as defined in the appended claims.

### [Effect of Invention]

When the injection refractory material of the present invention is heated in an environment having an ambient temperature of 80 to 500°C, i.e., a temperature during operation of a kiln or furnace, it undergoes a volume expansion of 1.3 times or more its initial volume before the heating. This makes it possible to compensate for shrinkage of the injection refractory material due to dehydration or the like and an area unfilled with the injection refractory material, to improve sealability of a gap in the kiln or furnace.

### BRIEF DESCRIPTION OF DRAWINGS

FIG. 1 is a transverse sectional view depicting a commonly-used structure of a coke oven.

### DESCRIPTION OF EMBODIMENTS

An injection refractory material of the present invention is characterized in that it is capable of, when heated in an environment having an ambient temperature of 80 to 500°C, undergoing a volume expansion of 1.3 times or more its initial volume before the heating. This volume expansibility (volume expansion rate) is obtained by forming the injection refractory material such that it contains a plurality of thermally expandable bodies each encapsulating a material capable of expanding at a temperature of 80 to 500°C. Each of the thermally expandable bodies is composed of a thermoplastic plastic body encapsulating liquefied gas. Specifically, when the liquefied gas which is in a liquid state at a normal temperature and a normal pressure is heated to 80 to 500°C, it is gasified to expand rapidly. This makes it possible to obtain a volume expansion rate of 1.3 times or more the initial volume before the heating. Although an upper limit of the volume expansion rate is not particularly limited, a volume expansion rate achievable by actual injection refractory materials naturally has an upper limit, e.g., 4 times or less.

Not according to the present invention, the capability of undergoing a volume expansion of 1.3 times or more can also be obtained by a technique other than addition of the thermally expandable bodies, e.g., by adding polyalcohol such as glycerin.

Examples of the liquefied gas to be encapsulated in the thermoplastic plastic body include isobutane, isopentane and trimethylpentane. Further, examples of thermoplastic plastic forming an outer shell of the thermoplastic plastic body include a copolymer of two or more of vinylidene chloride, acrylonitrile, methyl methacrylate, and methacrylonitrile. Although a shape of the thermoplastic plastic body is not particularly limited, a spherical shape is preferable from a viewpoint of work efficiency of pressure-injection.

Examples of the composition of the thermoplastic plastic bodies according to the present invention are as follows:
(1) With respect to the total amount, 100 mass%, of the injection refractory material, the injection refractory material contains the thermoplastic plastic bodies in an amount of 0.5 to 3 mass%, and silicate in an amount of 3 to 10 mass%.
(2) With respect to the total amount, 100 mass%, of the injection refractory material, the injection refractory material contains: the thermoplastic plastic bodies in an amount of 2 to 7 mass%; inorganic fibers in an amount of 60 mass% or more; and a thickener in an amount of 1 to 10 mass%. As used in this specification, the term "total amount of the injection refractory material" means an amount of the injection refractory material, except for an amount of water added before the injection.

In the composition example (1), silicate is added as a binder. The addition of silicate makes it possible to ensure strength of the injection refractory material as an injected body, necessary to maintain sealability. In the composition example (1), if the content of silicate is less than 3 mass%, the strength of the injected body necessary to maintain sealability becomes insufficient. On the other hand, if the content of silicate is greater than 10 mass%, heat resistance of the injected body is deteriorated.

In the composition example (1), a refractory raw material may be added to obtain heat resistance. Examples of the refractory raw material include one or a combination of two or more selected from the group consisting of fused or sintered alumina, mullite, synthetic mullite, mullite-alumina, magnesia-lime, magnesia, spinel, zirconia, zirconia-mullite, bauxite, sillimanite, andalusite, kyanite, alum shale, chamotte, agalmatolite, silica stone, molten silica, calcined alumina, ultrafine silica, zircon, chromium ore, silicon carbide, silicone nitride, natural graphite, synthetic graphite, anthracite, clay and bentonite. Machining chips or spent scrap of a refractory material made of one or more of the above refractory raw materials may also be used.

Further, fibers such as organic fibers or inorganic fibers, a defoaming agent, an air-entraining agent, and/or a thickener such as carboxymethyl cellulose, methylcellulose, dextrin, sodium alginate, ammonium alginate, welan gum, xanthane gum or starch, may be additionally added, as needed.

In the composition example (2), a thickener is added together with inorganic fibers. The addition of inorganic fibers makes it possible to improve plasticity of the injection refractory material in a hot condition and thus ensure sealability. For example, even when the oven is deformed by heat during operation thereof, the injection refractory material having plasticity as in the composition example (2) is capable of exhibiting high adaptability to the deformation of the oven to prevent deterioration in sealability due to the deformation of the oven. If the content of inorganic fibers is less than 60 mass%, it is difficult to sufficiently obtain the plasticity improving effect. Examples of the inorganic fibers include ceramic fibers, glass fibers, rock wool, carbon fibers, wollastonite fibers, and meerschaum.

In the composition example (2), the thickener is added to improve dispersibility of the inorganic fibers. Examples of the thickener include carboxymethyl cellulose, methylcellulose, dextrin, sodium alginate, ammonium alginate, welan gum, xanthane gum or starch. Among them, carboxymethyl cellulose is most preferable from a viewpoint of dispersibility of the inorganic fibers. In the composition example (2), if the content of the thickener is less than 1 mass%, the dispersibility of the inorganic fibers is deteriorated, thereby leading to formation of a defective injected body. On the other hand, if the content of the thickener is greater than 10 mass%, viscosity is excessively increased, thereby causing deterioration in the work efficiency.

In order to further improve the dispersibility, it is possible to use one or more selected from the group consisting of: dispersing agents such as condensed phosphoric acid, polyethylene glycol, polyether, polycarboxylic acid, polyacrylic acid, melamine sulphonate-based polymer, humic acid, alkyl sulphonic acid, phosphonic acid and aromatic sulphonic acid; low-viscosity anti-sagging agents such as synthetic polymer and starch ether; and substances capable of obtaining the same effects of them.

In the composition example (2), the refractory raw material as that in the composition example (1) may be added to obtain heat resistance.

In the composition examples (1) and (2), the thermoplastic plastic bodies are thermally expanded to thereby maintain shape retainability. Thus, it is not necessary to add a hydraulic binder, such as alumina cement, so as to ensure shape retainability. That is, the injection refractory material in each of the composition examples (1) and (2) does not comprise any hydraulic binder, so that it does not become hardened even water is added thereto. Therefore, it becomes possible to ensure shape retainability in a closed container at a normal temperature for 24 hours or more after kneading the injection refractory material with water added thereto. In addition, the injection refractory material in each of the composition examples (1) and (2) makes it possible to reduce time and effort for cleaning of a hardened portion, as compared to the case of using a hydraulic binder.

The injection refractory material according to the present invention is kneaded after adding thereto an appropriate amount of water, and then pressure-injected into a gap (target region to be sealed) of a kiln or furnace, in the same manner as that in a conventional injection refractory material. The injection refractory material according to the present invention has excellent sealability. Thus, it is particularly effectively applied to a target region which is hardly sealed using the conventional injection refractory material, specifically, to a gap or crack having a width of 30 mm or less in a region of a kiln or furnace whose temperature is raised to 80°C or more during operation thereof.

### [Examples]

### (Measurement and Evaluation 1)

With respect to each injection refractory material in Inventive, Reference and Comparative Examples having respective compositions presented in Table 1, the linear change, the compressive strength and the volume expansion rate were measured, and the sealability was evaluated to perform a comprehensive evaluation.

**TABLE 1**

| | | Inventive Example 1 | Inventive Example 2 | Inventive Example 3 | Inventive Example 4 | Inventive Example 5 | Inventive Example 6 | Inventive Example 7 | Reference Example 8 | Reference Example 9 | Reference Example 10 | Comparative Example 1 | Comparative Example 2 |
|---|---|---|---|---|---|---|---|---|---|---|---|---|---|
| Composition (mass%) | | | | | | | | | | | | | |
| Chamotte raw material | 2 - 0,5 mm | 25 | - | - | - | - | - | - | - | - | - | - | - |
| Chamotte raw material | <0.5 mm | 30 | 30 | - | - | - | - | - | - | - | - | - | - |
| Chamotte raw material | <75 µm | 32,5 | 57,5 | 87,5 | 88 | 85,5 | 90,5 | 83,5 | 84,5 | 92 | 81,5 | 88,5 | 88,2 |
| Clay | | 5 | 5 | 5 | 5 | 5 | 5 | 5 | 5 | 5 | 5 | 5 | 5 |
| Silicate | | 6 | 6 | 6 | 6 | 6 | 3 | 10 | 6 | 1,5 | 12 | 6 | 6 |
| Carboxymethyl cellulose | | 0,5 | 0,5 | 0,5 | 0,5 | 0,5 | 0,5 | 0,5 | 0,5 | 0,5 | 0,5 | 0,5 | 0,5 |
| Thermoplastic plastic spherical | | 1 | 1 | 1 | 0,5 | 3 | 1 | 1 | 4 | 1 | 1 | - | 0,3 |
| Water * 1 | | 25 | 30 | 35 | 34 | 37 | 35 | 35 | 38 | 35 | 35 | 33 | 34 |
| Linear change (%) | | -0.38 | -0.52 | -0.7 | -0.92 | -0.78 | -0.54 | -0.91 | -0.68 | -0.44 | -1.82 | -0.76 | -0.72 |
| Compressive strength (MPa) | | 5,7 | 4,7 | 4,1 | 4,4 | 4,1 | 2,6 | 5,5 | 0,5 | 1,2 | 7,2 | 4.3 | 4,2 |
| Volume expansion rate (Times) | | 1.8 | 1,8 | 1,8 | 1,5 | 2,0 | 2,0 | 1,7 | 3,4 | 2,1 | 1,3 | -0.05 | 1,2 |
| Scalability | | ○ | ○ | ○ | ○ | ○ | ○ | ○ | Δ | ○ | ○ | × | × |
| Comprehensive evaluation | | ○ | ○ | ○ | ○ | ○ | ○ | ○ | Δ | Δ | Δ | × | × |

| | | | | | | | | | | | | | |
|---|---|---|---|---|---|---|---|---|---|---|---|---|---|
| * 1 Mass% with respect to and in addition to 100 mass% of composition | | | | | | | | | | | | | |

As presented in Table 1, a chamotte raw material and clay were used as the refractory raw material, and silicate and carboxymethyl cellulose were used, respectively, as the binder and the thickener. Further, a thermoplastic plastic spherical body encapsulating isopentane was used as the thermoplastic plastic body.

The linear change and the compressive strength were measured with respect to a test piece obtained by: kneading the composition in each of Inventive, Reference and Comparative Examples after adding thereto a given amount of water, to obtain a kneaded sample; casting the kneaded sample into a mold form having a size of 40 × 40 × 160 mm; after drying the cast sample at 100°C for 24 hours in a constraint state, removing the dried sample from the mold form; and burning the removed sample at 1000°C for 3 hours.

The volume expansion rate was calculated by: kneading the composition in each of Inventive, Reference and Comparative Examples after adding thereto a given amount of water, to obtained a kneaded sample; casting the kneaded sample into a mold form having a size of 20 × 20 × 80 mm; after heating the mold form with the cast sample in a unconstraint state, in an electric furnace at 300°C for 2 hours, extracting the mold form from the electric furnace to cool the mold form; removing the cooled sample from the mold form to obtain a test piece; measuring external dimensions, i.e., height and breadth dimensions, of the test piece to calculate a volume of the test piece; and dividing the calculated volume (mm³) after heating and cooling by the casting size of 20 × 20 × 80 mm = 2,000 (mm³).

The sealability was evaluated by: forming a 10-mm gap in an experimental burner furnace to create a situation where flame is forcibly blown out through the gap; kneading the composition in each of Inventive, Reference and Comparative Examples after adding thereto a given amount of water, to obtain a kneaded sample; filling the gap with the kneaded sample by using a pressure feeder, wherein: when leakage of flame was fully stopped, the sample was evaluated as o; when the leakage of flame was slightly observed, the sample was evaluated as Δ; and when the leakage of flame was significantly observed, the sample was evaluated as ×.

The comprehensive evaluation was rated in three levels: ○, Δ and × (the evaluation becomes worse in order of ○ → Δ → ×). Specifically, when the sealability which is regarded as the technical problem of the present invention was evaluated as ×, the comprehensive evaluation was determined as ×. Similarly, when the sealability was evaluated as Δ, the comprehensive evaluation was also determined as Δ. Further, each value of the linear change and the compressive strength was relatively evaluated to determine whether the comprehensive evaluation is ○ or Δ. Specifically, the comprehensive evaluation of Reference Example 9 was determined as Δ, because the value of the compressive strength was relatively low. The comprehensive evaluation of Reference Example 10 was determined as Δ, because the value of the linear change was relatively large.

Inventive Examples 1 to 7 and Reference Examples 8 to 10 satisfy the requirement that the volume expansion rate is 1.3 times or more, and the comprehensive evaluations thereof were ○ or Δ. Particularly, in Inventive Examples 1 to 7 falling within the scope of the composition example (1), the comprehensive evaluations thereof were o, i.e., good results could be obtained.

On the other hand, in Comparative Examples 1 and 2 where the volume expansion rate is less than 1.3 times, the sealability was evaluated as ×.

### (Measurement and Evaluation 2)

With respect to each injection refractory material in Inventive, Reference and Comparative Examples having respective compositions presented in Table 2, the dispersibility, the viscosity and the plasticity were evaluated, and further the volume expansion rate and the sealability were measured and evaluated, respectively, to perform a comprehensive evaluation in the same manner as that in the Measurement and Evaluation 1.

**TABLE 2**

| | | Inventive Example 11 | Inventive Example 12 | Inventive Example 13 | Inventive Example 14 | Inventive Example 15 | Inventive Example 16 | Reference Example 17 | Reference Example 18 | Reference Example 19 | Reference Example 20 | Reference Example 21 | Comparative Example 3 | Comparative Example 4 | Comparative Example 5 | Comparative Example 6 |
|---|---|---|---|---|---|---|---|---|---|---|---|---|---|---|---|---|
| Composition (mass%) | | | | | | | | | | | | | | | | |
| Ceramic fibers | | 60 | 86 | 90 | 81 | 88 | 83 | 55 | 62 | 90,5 | 80 | 82 | 60 | 89 | 94 | 79 |
| Chamotte raw material | < 75 µm | 26 | - | - | - | - | - | 31 | 28,5 | - | - | - | 29 | - | - | - |
| Carboxymethyl cellulose | | 5 | 5 | 1 | 10 | 5 | 5 | 5 | 0,5 | 0,5 | 11 | 5 | 5 | 5 | - | 15 |
| Synthetic polymer | | 5 | 5 | 5 | 5 | 5 | 5 | 5 | 5 | 5 | 5 | 5 | 5 | 5 | 5 | 5 |
| Thermoplastic plastic spherical body | | 4 | 4 | 4 | 4 | 2 | 7 | 4 | 4 | 4 | 4 | 8 | 1 | 1 | 1 | 1 |
| Water * 1 | | 420 | 750 | 720 | 800 | 750 | 750 | 420 | 350 | 700 | 800 | 750 | 420 | 750 | 650 | 850 |
| Dispersibility | | ○ | ○ | ○ | ○ | ○ | ○ | ○ | Δ | Δ | ○ | ○ | ○ | ○ | × | ○ |
| Viscosity | | ○ | ○ | ○ | ○ | ○ | ○ | Δ | ○ | ○ | Δ | ○ | ○ | ○ | ○ | × |
| Plasticity | | Δ | ○ | ○ | ○ | ○ | ○ | Δ | Δ | ○ | ○ | ○ | Δ | ○ | × | × |
| Volume expansion rate (Times) | | 2,1 | 1,5 | 1,5 | 1,6 | 1.3 | 1,8 | 2,8 | 2,2 | 1,6 | 1,6 | 3,1 | 1,1 | -0.9 | -0.9 | -0.9 |
| Scalability | | ○ | ○ | ○ | ○ | ○ | ○ | ○ | ○ | ○ | ○ | Δ | × | × | × | × |
| Comprehensive evaluation | | ○ | ○ | ○ | ○ | ○ | ○ | Δ | Δ | Δ | Δ | Δ | × | × | × | × |

| | | | | | | | | | | | | | | | | |
|---|---|---|---|---|---|---|---|---|---|---|---|---|---|---|---|---|
| * 1 Mass% with respect to and in addition to 100 mass% of composition | | | | | | | | | | | | | | | | |

As presented in Table 2, ceramic fibers were used as the inorganic fibers, and a chamotte raw material was used as the refractory raw material. Further, carboxymethyl cellulose and synthetic polymer were used, respectively, as the thickener and the low-viscosity anti-sagging agent, and a thermoplastic plastic spherical body encapsulating isopentane was used as the thermoplastic plastic body.

The dispersibility was evaluated by: using a Kenmix table mixer produced by Aicohsha Manufacturing Co. Ltd., to knead, for 2 minutes, the composition in each of Inventive, Reference and Comparative Examples after adding thereto a given amount of water, to obtain a kneaded sample; and determining a degree of unraveling of the ceramic fibers in the kneaded sample, based on the sense of touch. When agglomerated ceramic fibers having a length of about 1 cm remain, the sample was evaluated as ×, and when the agglomerated ceramic fibers slightly remain, the sample was evaluated as Δ. Further, when no agglomerated ceramic fibers remain, the sample was evaluated as o.

The viscosity was evaluated by taking each kneaded sample between fingers, wherein: when the sample remains on the fingers and provides viscous feel, the sample was evaluated as ×; when the sample provides slight viscous feel, the sample was evaluated as Δ; and when the sample does not provide any viscous feel, the sample was evaluated as o.

The plasticity was evaluated by: kneading the composition in each of Inventive, Reference and Comparative Examples after adding thereto a given amount of water, to obtain a kneaded sample; casting the kneaded sample into a mold form having a size of 20 × 20 × 80 mm; after heating the mold form with the cast sample in an electric furnace at 300°C for 2 hours, extracting the mold form from the electric furnace to cool the mold form; removing the cooled sample from the mold form to obtain a test piece; and after applying a load of 0.1 MPa to the test piece to cause constriction of the test piece, releasing the load, wherein: when a shape restoration rate observed in response to the release of the load was 80% or more, the sample was evaluated as o; when the shape restoration rate was in the range of 50% to less than 80%, the sample was evaluated as Δ; and when the shape restoration rate was less than 50%, the sample was evaluated as ×.

The comprehensive evaluation was rated in three levels: ○, Δ and × (the evaluation becomes worse in order of o → Δ → ×). Specifically, when the sealability which is regarded as the technical problem of the present invention was evaluated as ×, the comprehensive evaluation was determined as ×. Otherwise, the comprehensive evaluation is determined in conformity to a worst one of the evaluations on the dispersibility, the viscosity, the plasticity and the sealability.

Inventive Examples 11 to 16 and Reference Examples 17 to 21 satisfy the requirement that the volume expansion rate is 1.3 times or more, and the comprehensive evaluations thereof were ○ or Δ. Particularly, in Inventive Examples 11 to 16 falling within the scope of the composition example (2), the comprehensive evaluations thereof were o, i.e., good results could be obtained.

On the other hand, in Comparative Examples 3 and 6 where the volume expansion rate is less than 1.3 times, the sealability was evaluated as ×.

## Claims

1. An injection refractory material applicable to a kiln or furnace, which does not comprise a hydraulic binder and is capable of, when it is heated in an environment having an ambient temperature of 80 to 500°C, undergoing a volume expansion of 1.3 times or more its initial volume before the heating, wherein the injection refractory material contains a plurality of thermally expandable bodies each encapsulating a material capable of expanding at a temperature of 80 to 500°C, each of the thermally expandable bodies being a thermoplastic plastic body encapsulating liquefied gas, and either (i) or (ii) is fulfilled:
(i) the thermoplastic plastic bodies each encapsulating liquefied gas are contained in an amount of 0.5 to 3 mass%, with respect to an total amount, 100 mass%, of the injection refractory material, wherein the injection refractory material further contains silicate as a binder in an amount of 3 to 10 mass%, with respect to the total amount, 100 mass%, of the injection refractory material;
(ii) the thermoplastic plastic bodies each encapsulating liquefied gas are contained in an amount of 2 to 7 mass%, with respect to a total amount, 100 mass%, of the injection refractory material, wherein the injection refractory material further contains inorganic fibers in an amount of 60 mass% or more, and a thickener in an amount of 1 to 10 mass%, with respect to the total amount, 100 mass%, of the injection refractory material.

2. A kiln or furnace to which the injection refractory material according to claim 1 has been applied.

## Patentansprüche

1. Ein feuerfestes Einspritzmaterial, das bei einem Brennofen oder Hochofen anwendbar ist, welches kein hydraulisches Bindemittel umfasst und, wenn es in einer Umgebung mit einer Umgebungstemperatur von 80 bis 500°C erwärmt wird, eine Volumenexpansion des 1,3-fachen oder mehr seines Ausgangsvolumens vor dem Erwärmen eingehen kann, wobei das feuerfeste Einspritzmaterial eine Vielzahl an thermisch expandierbaren Körpern enthält, die jeweils Material einverkapseln, welches bei einer Temperatur von 80 bis 500°C expandieren kann, wobei jeder der thermisch expandierbaren Körper ein thermoplastischer Kunststoffkörper ist, der Flüssiggas verkapselt und entweder (i) oder (ii) erfüllt ist:
(i) die thermoplastischen Kunststoffkörper, die jeweils Flüssiggas verkapseln, sind in einer Menge von 0,5 bis 3 Massen.-%, bezogen auf die Gesamtmenge von 100 Massen-% des feuerfesten Einspritzmaterials, enthalten, wobei das feuerfeste Einspritzmaterial ferner Silikat als Bindemittel in einer Menge von 3 bis 10 Massen-%, bezogen auf die Gesamtmenge von 100 Massen-% des feuerfesten Einspritzmaterials, enthält;
(ii) die thermoplastischen Kunststoffkörper, die jeweils Flüssiggas verkapseln, sind in einer Menge von 2 bis 7 Massen-%, bezogen auf die Gesamtmenge von 100 Massen-% des feuerfesten Einspritzmaterials, enthalten, wobei das feuerfeste Einspritzmaterial ferner anorganische Fasern in einer Menge von 60 Massen-% oder mehr und ein Verdickungsmittel in einer Menge von 1 bis 10 Massen-%, bezogen auf die Gesamtmenge von 100 Massen-% des feuerfesten Einspritzmaterials, enthält.

2. Ein Brennofen oder Hochofen, bei welchem das feuerfeste Einspritzmaterial gemäß Anspruch 1 angewendet wurde.

## Revendications

1. Matériau réfractaire pour injection applicable à un four ou un fourneau, qui ne comprend pas de liant hydraulique et qui est capable, lorsqu'il est chauffé dans un environnement ayant une température ambiante de 80 à 500°C, de subir une dilatation volumique de 1,3 fois ou plus son volume initial avant le chauffage, lequel matériau réfractaire pour injection contient une pluralité de corps thermiquement expansibles encapsulant chacun un matériau capable de se dilater à une température de 80 à 500°C, chacun des corps thermiquement expansibles étant un corps plastique thermoplastique encapsulant un gaz liquéfié, et dans lequel soit (i) soit (ii) est satisfait :
(i) les corps plastiques thermoplastiques encapsulant chacun un gaz liquéfié sont contenus en une quantité de 0,5 à 3 % en masse, par rapport à la quantité totale, de 100 % en masse, du matériau réfractaire pour injection, lequel matériau réfractaire pour injection contient en outre un silicate servant de liant en une quantité de 3 à 10 % en masse, par rapport à la quantité totale, de 100 % en masse, du matériau réfractaire pour injection ;
(ii) les corps plastiques thermoplastiques encapsulant chacun un gaz liquéfié sont contenus en une quantité de 2 à 7 % en masse, par rapport à la quantité totale, de 100 % en masse, du matériau réfractaire pour injection, lequel matériau réfractaire pour injection contient en outre des fibres inorganiques en une quantité de 60 % en masse ou plus, et un épaississant en une quantité de 1 à 10 % en masse, par rapport à la quantité totale, de 100 % en masse, du matériau réfractaire pour injection.

2. Four ou fourneau auquel le matériau réfractaire pour injection de la revendication 1 a été appliqué.
